# EUROPEAN PATENT APPLICATION

(11) **EP 4 166 621 A1**
(43) Date of publication of application: **19.04.2023**
(21) Application number: 21825529.7
(22) Date of filing: 09.06.2021
(51) Int. Cl.: C09K 3/14, F16D 65/092, F16D 65/12, F16D 69/02

(54) **FRICTION PAIR**

(30) Priority: 16.06.2020 JP 2020103802
(71) Applicant: Nisshinbo Brake Inc., Chuo-ku Tokyo 103-8650 (JP)
(72) Inventor: FUNAMOTO, Sota, Ora-gun, Gunma 370-0614 (JP); KURIMOTO, Kenta, Ora-gun, Gunma 370-0614 (JP)
(74) Representative: Stolmár & Partner Patentanwälte PartG mbB
(86) International application number: PCT/JP2021/021877
(87) International publication number: WO 2021/256336

(57) **Abstract**

[Object]

To provide a friction pair having an excellent stability of a braking effect and wear resistance of a friction material, where the friction pair is consisting of a disc brake pad having a friction material manufactured from a friction material composition containing a binder, a fiber base material, and a friction modifier, but not containing a copper component and a ferrous-base metallic fiber, and a stainless steel disc rotor.

[Means to Resolve the Problems]

To use a friction material composition that does not contain a metallic fiber other than a ferrous-base metallic fiber but contains 10 - 15 weight % of a carbonaceous lubricant as a friction modifier relative to an entire friction material composition, and 15 - 30 weight % of an inorganic friction modifier with Mohs hardness of 6 or more relative to the entire friction material composition, where a thermal conductivity of the friction material is 1.2 - 3.0W/m·K.

## Description

### [Field of Invention]

This invention relates to a friction pair, especially relating to a friction pair used for a vehicle such as a passenger car.

### [Background of Invention]

Conventionally, a disc brake pad with a friction material affixed on a metal base member has been used as a friction member of a disc brake for a passenger car.

Recently, as a quietness of a brake has been required, a disc brake pad with a non-asbestos-organic (NAO) friction material to produce less brake noise has widely been used.

The NAO friction material is manufactured by forming a friction material composition containing a binder, a fiber base material other than a steel based fibers such as a steel fiber and a stainless steel fiber, and the NAO friction material is classified as one type of friction materials in parallel with a semi-metallic friction material and a low steel friction material that contain the steel based fiber as the fiber base material. Then, recently, because of the laws and regulations in the United States of America that restricts the amount of copper component in the friction material, the friction material that contains 5 weight % or less of the copper component or does not contain the copper component became more common.

Patent Document 1 discloses the friction material composition that contains the fiber base material, the friction modifier, and the binder, where the friction material composition contains the copper component of 0.5 weight % or less in terms of the copper element and contains a granular titanate obtained by granulating the titanate, as the friction modifier, which has an average particle diameter of the granular titanate of 100 - 250µm and further discloses the friction material obtained by forming the friction material composition.

Patent Document 2 discloses the friction material composition that contains the fiber base material, the inorganic filler, the organic filler, and the binder, and also contains 0.5 mass % or less of the copper, where the friction material composition further contains, as a part of the inorganic filler, an abrasive with the average particle diameter of 3 - 5µm and an abrasive with the average particle diameter of 9 - 13µm and contains, also as the other part of inorganic filler, the titanate with the average particle diameter of 1.5 - 4.5µm and the titanate with the average particle diameter of 15 - 45µm.

As a mating member for the disc brake pad with such a friction material containing almost no copper component, the cast iron disc rotor as in Patent Document 3 has been used. The cast iron disc rotor shows low corrosion resistance and has a problem of rusting while in use, and the friction material has been required to find a countermeasure of the friction material for this problem.

For example, Patent Document 4 discloses the friction material that contains the binder, the friction modifier, and the fiber base material, which improves the descaling performance of the mating member by containing no copper component, 10 - 20 volume %, relative to an entire amount of the friction material composition, of at least one type of titanate compound having multiple projections and 1-20 volume %, relative to the entire amount of the friction material composition, of the biosoluble inorganic fiber.

However, as an installation of a regenerative brake has been progressed due to the development of an electric vehicle and a hybrid car, because the brake load applied on the friction material of the conventional hydraulic brake is reduced, a problem of not obtaining sufficient descaling performance even with the technology in the Patent Document 4 exists.

Therefore, the stainless steel disc rotor that has superior rust resistance has been commonly used.

Patent Document 5 discloses the disc rotor for four wheel vehicle, which is manufactured by a stainless steel plate, having the martensite structure or a mixed structure of the martensite phase and the ferrite phase.

Patent Document 6 discloses the disc rotor for an automobile having the structure containing the martensite and the carbonitride and selectively containing the ferrite.

Patent Document 7 discloses the disc rotor for an automobile made of the stainless steel plate that includes C: 0.005 - 0.100%, Si: 0.01 - 1.00%, Mn: 0.010 - 3.00%, P: 0.040% or less, S: 0.0100% or less, Cr: 10.0 - 14.0%, N: 0.005 - 0.100%, V: 0.03 - 0.30%, Al: 0.001 - 0.050%, B: 0.0002 - 0.0050%, Ni: 0 - 2.00%, Cu: 0 - 2.00%, Mo: 0 - 1.00%, W: 0 - 1.00%, Ti: 0 - 0.40%, Nb: 0 - 0.40%, Zr: 0 - 0.40%, Co: 0 - 0.400%, Sn: 0 - 0.40%, REM: 0 - 0.050% or less, Mg: 0 - 0.0100%, Ca: 0 - 0.0100%, Sb: 0 - 0.50%, Ta: 0 - 0.3000%, Hf: 0 - 0.3000%, and Ga: 0 - 0.1000%, and the remaining substances are Fe and impurities, where a metal structure is made of a ferrite phase and 10 - 50 particles per 100µm2 of carbonitride with 0.3µm or more of equivalent circle diameter exists at an arbitrary cross section thereof.

Because of the above-described background, the friction material that does not contain the copper component but is suitable for the stainless steel disc rotor with superior rust resistance has been on demand; however, it was found that applying the conventional friction material that does not contain the copper component and is used in combination with the cast iron disc rotor to the disc brake employing the stainless steel disc rotor would significantly reduce a stability of the braking effect in the low speed range.

### [Prior Arts]

### [Patent Documents]

[Patent Document 1] Japanese Provisional Patent Publication No. 2017-57312
[Patent Document 2] Japanese Provisional Patent Publication No. 2018-162385
[Patent Document 3] Japanese Provisional Patent Publication No. 1990-134425
[Patent Document 4] Japanese Provisional Patent Publication No. 2017-149971
[Patent Document 5] Japanese Provisional Patent Publication No. 2016-117925
[Patent Document 6] Japanese Provisional Patent Publication No. 2019-173086
[Patent Document 7] Japanese Provisional Patent Publication No. 2019-178419

### [Summary of the Invention]

### [Problems to be Resolved by the Invention]

This invention is aimed to provide a friction pair having an excellent stability of a braking effect and wear resistance of a friction material, where the friction pair is consisting of a disc brake pad that is manufactured from a friction material composition containing a binder, a fiber base material, and a friction modifier but not containing a copper component and a ferrous-base metallic fiber, and a stainless steel disc rotor.

### [Means to Resolve the Problems]

Inventors of this invention, after serious investigation, found that with respect to the friction pair that is consisting of the disc brake pad having the friction material that is manufactured from the friction material composition containing the binder, the fiber base material, and the friction modifier but not containing the copper component and the ferrous-base metallic fiber, and the stainless steel disc rotor, the friction pair is capable of having the excellent stability of the braking effect and wear resistance of the friction material by using the friction material composition that does not contain the metallic fiber other than the ferrous-base metallic fiber but contains the predetermined amount of the carbonaceous lubricant as the friction modifier and the predetermined amount of the inorganic friction modifier with Mohs hardness of 6 or more and setting the thermal conductivity of the friction material to be within the predetermined range.

This invention relates to the friction pair that is consisting of the disc brake pad having the friction material that is manufactured from the friction material composition containing the binder, the fiber base material, and the friction modifier but not containing the copper component and the ferrous-base metallic fiber, and the stainless steel disc rotor, and further is based on the following technology.
(1) The friction pair that is consisting of the disc brake pad having the friction material that is manufactured from the friction material composition containing the binder, the fiber base material, and the friction modifier but not containing the copper component and the ferrous-base metallic fiber, and the stainless steel disc rotor, wherein
   the friction material composition does not contain the metallic fiber other than the ferrous-base metallic fiber but contains 10 - 15 weight % of the carbonaceous lubricant as the friction modifier relative to the entire friction material composition, and 15 - 30 weight % of the inorganic friction modifier with Mohs hardness of 6 or more relative to the entire friction material composition, and the thermal conductivity of the friction material is 1.2 - 3.0W/m·K.
(2) The friction pair according to (1), wherein the carbonaceous lubricant may be one or more materials selected from the group consisting of the artificial graphite, the natural graphite, the graphite sheet pulverized powder, the petroleum coke, the coal coke, the resilient graphite carbon, and the polyacrylonitrile oxidized fiber pulverized powder.
(3) The friction pair according to (2), wherein the carbonaceous lubricant may be made of the graphite sheet pulverized powder, the petroleum coke, and the resilient graphite carbon.
(4) The friction pair according to any one of (1) to (3), wherein 13 - 28 weight % of the zirconium oxide with the average particle diameter of 0.5 - 8.0µm relative to the entire friction material composition is contained as a part of the inorganic friction modifier with Mohs hardness of 6 or more.

### [Advantages of the Invention]

This invention relates to the friction pair that is consisting of the disc brake pad having the friction material that is manufactured from the friction material composition containing the binder, the fiber base material, and the friction modifier but not containing the copper component and the ferrous-base metallic fiber, and the stainless steel disc rotor, and that can provide the friction pair having the excellent stability of the braking effect and wear resistance of the friction material.

### [Embodiment of the Invention]

A stainless steel disc rotor has smaller conductivity and diffusivity than a cast iron disc rotor. Also, the stainless steel has slightly larger specific gravity but higher strength than the cast iron. Accordingly, the stainless steel disc rotor needs to be thinner to consider the equivalent specific gravity and the strength to the cast iron disc rotor as a necessary precondition. Accordingly, a heat capacity of the disc rotor becomes smaller, which tends to accumulate the heat in the disc rotor and tends to make the temperature of the friction material high.

When the temperature of the friction material becomes high, organic substances such as the binder and the inorganic friction modifier contained in the friction material tend to thermally decomposed, and the stability of the braking effect is reduced as the decomposed organic substances position on the friction surface. Also, because the binder is thermally decomposed, the strength of the friction material is significantly reduced, and therefore the wear resistance is reduced.

In consideration of the above-issue, with respect to the friction pair that is consisting of the disc brake pad having the friction material having the friction material composition containing the binder, the fiber base material, and the friction modifier but not containing the copper component and the ferrous-base metallic fiber, and the stainless steel disc rotor, this invention uses the friction material composition that does not contain the metallic fiber other than the ferrous-base metallic fiber but contains 10-15 weight % of the carbonaceous lubricant as the friction modifier relative to the entire friction material composition, and 15 - 30 weight % of the inorganic friction modifier with Mohs hardness of 6 or more relative to the entire friction material composition, and the thermal conductivity of the friction material is 1.2 - 3.0W/m·K.

A heat dissipation can be provided to the friction material by adding a relatively large amount of the carbonaceous lubricant as the friction modifier relative to the entire amount of the friction material composition and by setting the thermal conductivity of the friction material to be within the predetermined range.

Also, in this specification, the friction material portion is cut out from the final product, i.e., the disc brake pad, and the thermal conductivity thereof is measured by the hot wire method using the Rapid Thermal Conductivity Meter.

By setting the amount of the carbonaceous lubricant and the thermal conductivity of the friction material within the above-stated range, the heat dissipation of the friction material is improved, and the temperature rise of the friction material can be inhibited. As the result, the thermal decomposition of the organic substances contained in the friction material is inhibited, and the lubricant effect of the carbonaceous lubricant improves the wear resistance.

However, merely adding the relatively large amount of the carbonaceous lubricant reduces the stability of the braking effect due to the lubricant effect of the carbonaceous lubricant. Therefore, in order to cancel out the lubricant effect because of the addition of the carbonaceous lubricant, 15 - 30 weight % of the inorganic friction modifier with Mohs hardness of 6 or more relative to the entire friction material composition is added as the friction modifier.

By setting the amount of the inorganic friction modifier with the Mohs hardness of 6 or more contained therein to be within the above-range, a grinding effect against the disc rotor can be obtained, and the excellent stability of the braking effect can obtained even if the relatively large amount of the carbonaceous lubricant is added.

Also, the Mohs hardness used in this invention is an old Mohs, representing 1 = talc, 2 = gypsum, 3 = calcite, 4 = fluorite, 5 = apatite, 6 = orthoclase feldspar, 7 = quartz, 8 = topaz, 9 = corundum, and 10 = diamond.

As the carbonaceous lubricant, either one of the lubricants such as an artificial graphite, a natural graphite, a graphite sheet pulverized powder, a petroleum coke, a coal coke, a resilient graphite carbon, and a polyacrylonitrile oxide fiber pulverized powder, or a combination of two or more of the above-identified lubricants may be used, but the use of a combination of the graphite sheet pulverized powder, the petroleum coke, and the resilient graphite carbon is preferable.

The graphite sheet pulverized powder is the material obtained through acidizing and heat expanding the natural graphite, roll pressing the resulted expanded graphite to make a sheet, and pulverizing the graphite sheet. The resilient graphite carbon is the material obtained through graphitizing a carbon material at 1900 - 2700 centigrade but stopping the graphitization at 80 - 95% of the graphitization process.

As the inorganic friction modifier of the Mohs hardness of 6 or more, either one of a triiron tetroxide, a magnesium oxide, a zirconium oxide, a silicon dioxide, a zirconium silicate, a γ-alumina, an α-alumina, a silicon carbide, a glass fiber, a biosoluble ceramic fiber, a rock wool, and a basalt fiber, or a combination of two or more of the above-identified inorganic friction modifier may be used.

As a part of the inorganic friction modifier with the Mohs hardness of 6 or more, 15-30 weight % of which relative to the entire friction material composition is added thereto, it is preferable to add the zirconium oxide with the average particle diameter of 0.5 - 8µm, and the amount of the zirconium oxide to be added is preferably 13 - 28 weight % relative to the entire friction material composition.

Here, in this specification, the average particle diameter is a particle diameter (50D) measured by Laser Diffraction Particle Size Analyzer.

### <Friction Material Composition>

The friction material used in the friction pair of this invention is manufactured from the friction material composition that is generally used for the friction material having the binder, the fiber base material, and the friction modifier in addition to the above-explained carbonaceous lubricant and the inorganic friction modifier with the Mohs hardness of 6 or more.

As the binder, either one of binders that are generally used for the friction material such as a straight phenol resin, an acrylic rubber modified phenol resin, a silicone rubber modified phenol resin, a nitrile rubber (NBR) modified phenol resin, a cashew nuts shell liquid (CNSL) modified phenol resin, an aralkyl modified phenol resin (phenol aralkyl resin) obtained by reacting a phenol compound, an aralkyl ether compound and an aldehyde compound, an acrylic rubber dispersed phenol resin, a silicone rubber dispersed phenol resin, and a fluoropolymer dispersed phenol resin, or a combination of two or more of the above-identified binders may be used.

The amount of the binder contained in the friction material composition is preferably 4 - 9 weight % relative to the entire amount of the friction material composition, more preferably 6-8 weight % relative to the entire amount of the friction material composition.

As the fiber base material, either one of fiber base materials that are generally used for the friction material such as an aramid fiber, an acrylic fiber, a cellulose fiber, and a polyphenylene benzbisoxazole fiber, or a combination of two or more of the above-identified fiber base materials may be used.

The amount of the fiber base material contained in the friction material composition is preferably 1 - 5 weight % relative to the entire amount of the friction material composition, more preferably 2-4 weight % relative to the entire amount of the friction material composition.

As the friction modifier, a lubricant, an inorganic friction modifier, and an organic friction modifier may be used.

As the lubricant, in addition to the above-identified carbon based lubricants, either one of metal sulfide lubricants such as a tin sulfide, a molybdenum disulfide, an iron sulfide, a bismuth sulfide, zinc sulfide, and a composite metal sulfide, or a combination of two or more of the above-identified lubricants may be used.

The amount of the lubricant contained in the friction material composition, together with the above-identified carbonaceous lubricant, is preferably 10 - 18 weight % relative to the entire amount of the friction material composition, more preferably 11 - 16 weight % relative to the entire amount of the friction material composition.

As the inorganic friction modifier, other than the above-identified inorganic friction modifier with the Mohs hardness of 6 or more, either one of a calcium hydroxide, a calcium carbonate, a barium sulfate, a talc, a dolomite, a zeolite, a calcium silicate hydrate, a columnar titanate, a plate-like titanate, a particulate titanate, a scale shape titanate, an indefinite shape titanate with multiple projections, where the titanate may be such as a potassium titanate, a lithium potassium titanate, a magnesium potassium titanate, and a sodium titanate, a wollastonite, or a sepiolite, or a combination of two or more of the above-identified inorganic friction modifier may be used.

The amount of the inorganic friction modifier contained in the friction material composition together with the inorganic friction modifier with the Mohs hardness of 6 or more is preferably 60 - 82 weight % relative to the entire amount of the friction material composition, more preferably 65 - 76 weight % relative to the entire amount of the friction material composition.

As the organic friction modifier, either one of the organic friction modifiers that are generally used for the friction material such as a cashew dust, a tire tread rubber pulverized powder, a polytetrafluoroethylene powder, vulcanized rubbers or unvulcanized rubbers such as an acrylic rubber, an isoprene rubber, a nitrile butadiene rubber, a styrene-butadiene rubber, a butyl rubber, and a silicone rubber, or a combination of two or more of the above-identified organic friction modifiers may be used.

The amount of the organic friction modifier contained in the friction material composition is preferably 3-8 weight % relative to the entire amount of the friction material composition, more preferably 5 - 7 weight % relative to the entire amount of the friction material composition.

### <Manufacturing Method for Disc Brake Pad>

The disc brake pad according to this invention is typically manufactured through a mixing step for uniformly mixing the predetermined amount of the friction material composition (raw friction material) by a mixer to obtain a raw friction material mixture, a heat press forming step for positioning the obtained raw friction material mixture superposed on a prewashed, surface-treated, and adhesive-coated back plate in a heat forming die to heat press the raw friction material mixture on the back plate to obtain a heat press formed article, a heating step for heating to cause a curing reaction of the heat press formed article to obtain a cured article, a coating step for coating the cured article such as by spray coating and electrostatic powder coating, a baking step for baking the coating to obtain a baked article, and a grinding step for grinding the baked article by a rotary grinder to form a friction surface.

Further, after the heat press forming step, a heat treatment step, which is a combination of the coating step and the baking step, and then the grinding step may follow respectively.

Also, as appropriate, prior to the heat press forming step, a granulating step for granulating the raw friction material mixture, a kneading step for kneading the raw friction material mixture, and a pre-forming step for forming a pre-formed article by positioning the raw friction material mixture or the granulated article obtained through the granulating step or the kneaded article obtained through the kneading step, may be performed, and a scorching step may be performed after the heat press forming step.

### <Stainless Steel Disc Rotor>

As the stainless steel disc rotor, for example, a martensite type stainless steel disc rotor or a ferrite type stainless steel disc rotor may be used.

### [Embodiments]

This invention is explained concretely using the Embodiments and the Comparative Examples of this invention in the following sections; however, this invention is not limited to the following Embodiments.

### [Manufacturing Method for the Friction Material According to Embodiments 1 - 14 and Comparative Examples 1 - 5]

The friction material compositions with the compositions shown in Table 1 and Table 2 were positioned in the Loedige mixer to be mixed for about 5 minutes and is pressed in a pre-forming die under 30MPa for about 10 seconds to obtain the pre-formed article. The pre-formed article is superposed on the steel back plate, which is pre-washed, surface treated, and adhesive coated, to be heat-pressed in the heat forming die at 150 centigrade under the forming pressure of 40MPa for about 10 minutes, then the heat treatment (postcure treatment) at 200 centigrade is performed for about 5 hours, and the grinding step is performed to form the friction surface, thereby obtaining the disc brake pad for a passenger car.

**[TABLE 1]**

| | | | | embodiments | | | | | | | | |
|---|---|---|---|---|---|---|---|---|---|---|---|---|
| | | | | 1 | 2 | 3 | 4 | 5 | 6 | 7 | 8 | 9 |
| binder | | | straight phenol resin | 7.0 | 7.0 | 7.0 | 7.0 | 7.0 | 7.0 | 7.0 | 7.0 | 7.0 |
| fiber base | | | aramid fiber | 2.5 | 2.5 | 2.5 | 2.5 | 2.5 | 2.5 | 2.5 | 2.5 | 2.5 |
| friction modifier | lubricant | carbonaceous lubricants | graphite sheet pulverized powder | 4.5 | 4.5 | 5.0 | 6.0 | 7.0 | 5.0 | 5.0 | 5.0 | 5.0 |
| | | | petroleum coke | 4.5 | 4.5 | 5.0 | 6.0 | 7.0 | 5.0 | 5.0 | 5.0 | 5.0 |
| | | | resilient graphite carbon | | 1.0 | 1.0 | 1.0 | 1.0 | 1.0 | 1.0 | 1.0 | 1.0 |
| | | | natural graphite (scale shape graphite) | 1.0 | | | | | | | | |
| | | metal sulfide lubricants | zinc sulfide | 1.0 | 1.0 | 1.0 | 1.0 | 1.0 | 1.0 | 1.0 | 1.0 | 1.0 |
| | inorganic friction modifier | | zirconium oxide: average particle diameter of 0.3µm | | | | | | | | | |
| | | | zirconium oxide: average particle diameter of 0.5µm | | | | | | | | | |
| | | | zirconium oxide: average particle diameter of 3.0µm | 23.0 | 23.0 | 23.0 | 23.0 | 23.0 | 13.0 | 20.0 | 25.0 | 28.0 |
| | | | zirconium oxide: average particle diameter of 5.0µm | | | | | | | | | |
| | | | zirconium oxide: average particle diameter of 8.0µm | | | | | | | | | |
| | | | zirconium oxide: average particle diameter of 10.0µm | | | | | | | | | |
| | | | zirconium silicate | 1.0 | 1.0 | 1.0 | 1.0 | 1.0 | 1.0 | 1.0 | 1.0 | 1.0 |
| | | | Γ alumina | 1.0 | 1.0 | 1.0 | 1.0 | 1.0 | 1.0 | 1.0 | 1.0 | 1.0 |
| | | | potassium titanate | 20.0 | 20.0 | 20.0 | 20.0 | 20.0 | 20.0 | 20.0 | 20.0 | 20.0 |
| | | | calcium hydroxide | 3.0 | 3.0 | 3.0 | 3.0 | 3.0 | 3.0 | 3.0 | 3.0 | 30 |
| | | | barium sulfate | 25.0 | 25.0 | 24.0 | 22.0 | 20.0 | 34.0 | 27.0 | 22.0 | 19.0 |
| | organic friction modifier | | cashew dust | 5.0 | 5.0 | 5.0 | 5.0 | 5.0 | 5.0 | 5.0 | 5.0 | 5.0 |
| | | | tire tread rubber pulverized powder | 1.5 | 1.5 | 1.5 | 1.5 | 1.5 | 1.5 | 1.5 | 1.5 | 1.5 |
| total | | | | 100.0 | 100.0 | 100.0 | 100.0 | 100.0 | 100.0 | 100.0 | 100.0 | 100.0 |
| | | | thermal conductivity (W/m·K) | 1.5 | 1.2 | 1.8 | 2.3 | 2.9 | 1.8 | 1.6 | 1.6 | 1.4 |

**[TABLE 2]**

| | | | | embodiments | | | | | comparative examples | | | | |
|---|---|---|---|---|---|---|---|---|---|---|---|---|---|
| | | | | 10 | 11 | 12 | 13 | 14 | 1 | 2 | 3 | 4 | 5 |
| binder | | | straight phenol resin | 7.0 | 7.0 | 7.0 | 7.0 | 7.0 | 7.0 | 7.0 | 7.0 | 7.0 | 7.0 |
| fiber base | | | aramid fiber | 2.5 | 2.5 | 2.5 | 2.5 | 2.5 | 2.5 | 2.5 | 2.5 | 2.5 | 2.5 |
| friction modifier | lubricant | carbonaceous lubricants | graphite sheet pulverized powder | 5.0 | 5.0 | 5.0 | 5.0 | 5.0 | 4.0 | 1.0 | 7.5 | 5.0 | 5.0 |
| | | | petroleum coke | 5.0 | 5.0 | 5.0 | 5.0 | 5.0 | 4.0 | 1.0 | 7.5 | 5.0 | 5.0 |
| | | | resilient graphite carbon | 1.0 | 1.0 | 1.0 | 1.0 | 1.0 | 1.0 | 1.0 | 1.0 | 1.0 | 1.0 |
| | | | natural graphite (scale shape graphite) | | | | | | | 7.0 | | | |
| | | metal sulfide lubricants | zinc sulfide | 1.0 | 1.0 | 1.0 | 1.0 | 1.0 | 1.0 | 1.0 | 1.0 | 1.0 | 1.0 |
| | inorganic friction modifier | | zirconium oxide: average particle diameter of 0.3µm | 23.0 | | | | | | | | | |
| | | | zirconium oxide: average particle diameter of 0.5µm | | 23.0 | | | | | | | | |
| | | | zirconium oxide: average particle diameter of 3.0µm | | | | | | 23.0 | 23.0 | 23.0 | 12.0 | 29.0 |
| | | | zirconium oxide: average particle diameter of 5.0µm | | | 23.0 | | | | | | | |
| | | | zirconium oxide: average particle diameter of 8.0µm | | | | 23.0 | | | | | | |
| | | | zirconium oxide: average particle diameter of 10.0µm | | | | | 23.0 | | | | | |
| | | | zirconium silicate | 1.0 | 1.0 | 1.0 | 1.0 | 1.0 | 1.0 | 1.0 | 1.0 | 1.0 | 1.0 |
| | | | Γ alumina | 1.0 | 1.0 | 1.0 | 1.0 | 1.0 | 1.0 | 1.0 | 1.0 | 1.0 | 1.0 |
| | | | potassium titanate | 20.0 | 20.0 | 20.0 | 20.0 | 20.0 | 20.0 | 20.0 | 20.0 | 20.0 | 20.0 |
| | | | calcium hydroxide | 3.0 | 3.0 | 3.0 | 3.0 | 3.0 | 3.0 | 3.0 | 3.0 | 3.0 | 3.0 |
| | | | barium sulfate | 24.0 | 24.0 | 24.0 | 24.0 | 24.0 | 26.0 | 25.0 | 19.0 | 35.0 | 18.0 |
| | organic friction modifier | | cashew dust | 5.0 | 5.0 | 5.0 | 5.0 | 5.0 | 5.0 | 5.0 | 5.0 | 5.0 | 5.0 |
| | | | tire tread rubber pulverized powder | 1.5 | 1.5 | 1.5 | 1.5 | 1.5 | 1.5 | 1.5 | 1.5 | 1.5 | 1.5 |
| total | | | | 100.0 | 100.0 | 100.0 | 100.0 | 100.0 | 100.0 | 100.0 | 100.0 | 100.0 | 100.0 |
| | | | thermal conductivity (W/m·K) | 1.6 | 1.6 | 1.7 | 1.8 | 1.7 | 1.1 | 1.1 | 3.1 | 1.8 | 1.4 |

Furthermore, test pieces of the Embodiments 1-14 and the Comparative Examples 1 - 5 are prepared by cutting the friction material for the disc brake pad into 25mm × 15mm × 15mm pieces.

Table 3 shows the "Testing Condition", "Material of Mating Member", "Evaluation Items", and "Evaluation Standard" used to examine the stability of the braking effect and the wear resistance of the friction material using the test pieces.

**[TABLE 3]**

| | | braking effectiveness | wear resistance of the friction material |
|---|---|---|---|
| testing condition | | based on JASO C406 friction tester (1/10 scale tester) | based on JASO C406 friction tester (1/10 scale tester) |
| material of the mating member | | martensitic stainless steel | martensitic stainless steel |
| evaluation Items | | changes relative to µ level of the base material x cast iron at JASO-C406 friction testing | wear amount of friction of the brake pad after JASO-C406 friction testing |
| evaluation Standard | E | 0.38 with tolerance of less than ±5% | less than 1.5mm |
| | G | 0.38with tolerance of more than ±5% but less than ±10% | 1.5mm or more but less than 2.0mm |
| | P | 0.38 with tolerance of ±10% or more but less than ±15% | 2.0mm or more but less than 2.5mm |
| | F | 0.38 with tolerance of ±15% or more | 2.5mm or more |
| | - | Unable to evaluate because of the product wrinkle or crack | Unable to evaluate because of the product wrinkle or crack |

Table 4 shows the "Evaluation Items" and the "Evaluation Standard" of the "Product Appearance" of the test pieces. The "Product" here means the final product, i.e., "disc brake pad".

**[TABLE 4]**

| | | product appearance |
|---|---|---|
| evaluation items | | visual checking of the product appearance |
| evaluation standard | ○ | no wrinkles and crack |
| | × | wrinkles and crack |

Table 5 and Table 6 show the "Stability of the Braking Effect", "Wear Resistance of the Friction Material", and the "Product Appearance" shown in Table 3 and Table 4 relative to the respective embodiments and the comparative examples.

**[TABLE 5]**

| | | embodiments | | | | | | | | |
|---|---|---|---|---|---|---|---|---|---|---|
| | | 1 | 2 | 3 | 4 | 5 | 6 | 7 | 8 | 9 |
| evaluation result | stability of braking effectiveness | P | G | E | G | P | P | E | E | G |
| | wear resistance | P | G | E | E | E | E | E | E | P |
| | product appearance | G | G | G | G | G | G | G | G | G |

| | | | | | | | | | | |
|---|---|---|---|---|---|---|---|---|---|---|
| E = excellent G = good P = pass | | | | | | | | | | |

**[TABLE 6]**

| | | embodiments | | | | | comparative examples | | | | |
|---|---|---|---|---|---|---|---|---|---|---|---|
| | | 10 | 11 | 12 | 13 | 14 | 1 | 2 | 3 | 4 | 5 |
| evaluation result | stability of braking effectiveness | P | G | E | E | E | F | F | F | F | - |
| | wear resistance | E | E | E | G | P | F | P | E | E | - |
| | product appearance | G | G | G | G | G | G | G | G | G | F |

| | | | | | | | | | | | |
|---|---|---|---|---|---|---|---|---|---|---|---|
| E=excellent G = good P = pass F = fail - = unable to evaluate | | | | | | | | | | | |

Viewing from Table 5 and Table 6, the friction materials satisfying the conditions of this invention are satisfactory as to the stability of the braking effect of the friction material, the wear resistance of the friction material, and the product appearance.

### [Industrial Applicability]

According to this invention, with respect to the friction pair, being consisting of the disc brake pad having the friction material manufactured from the friction material composition containing the binder, the fiber base material, and the friction modifier but not containing the copper component and the ferrous-based metal fiber and the stainless steel disc rotor, this invention can provide the friction pair that provides the excellent stability of the braking effect, the excellent wear resistance of the friction material, and the excellent product appearance, and provides the excellent practical value.

## Claims

1. A friction pair being consisting of a disc brake pad having a friction material manufactured from a friction material composition comprising a binder, a fiber base material, and a friction modifier, but not comprising a copper component and a ferrous-base metallic fiber, and a stainless steel disc rotor, wherein
the friction material composition does not contain a metallic fiber other than a ferrous-base metallic fiber but contains 10 - 15 weight % of a carbonaceous lubricant as a friction modifier relative to an entire friction material composition, and 15 - 30 weight % of an inorganic friction modifier with Mohs hardness of 6 or more relative to the entire friction material composition, and
a thermal conductivity of the friction material is 1.2 - 3.0W/m·K.

2. The friction pair according to Claim 1, wherein
the carbonaceous lubricant may be one or more materials selected from the group consisting of an artificial graphite, a natural graphite, a graphite sheet pulverized powder, a petroleum coke, a coal coke, a resilient graphite carbon, and a polyacrylonitrile oxidized fiber pulverized powder.

3. The friction pair according to Claim 2, wherein
the carbonaceous lubricant is made of the graphite sheet pulverized powder, the petroleum coke, and the resilient graphite carbon.

4. The friction pair according to any one of Claim 1-Claim 3, wherein
13 - 28 weight % of a zirconium oxide with an average particle diameter of 0.5 - 8.0µm relative to the entire friction material composition is contained as a part of the inorganic friction modifier with Mohs hardness of 6 or more.
